# EUROPEAN PATENT APPLICATION

(11) **EP 2 150 054 A1**
(43) Date of publication of application: **03.02.2010**
(21) Application number: 08764386.2
(22) Date of filing: 20.05.2008
(51) Int. Cl.: H04N 7/18, B60R 1/00, G06T 1/00, B60R 21/00

(54) **PERIPHERY SURVEILLANCE DEVICE FOR VEHICLES**

(30) Priority: 30.05.2007 JP 2007143837
(71) Applicant: Aisin Seiki Kabushiki Kaisha, Kariya-shi, Aichi 448-8650 (JP)
(72) Inventor: KUBOYAMA, Tsuyoshi, Kariya-shi Aichi 448-8650 (JP); WATANABE, Kazuya, Kariya-shi Aichi 448-8650 (JP); YAMANAKA, Takashi, Kariya-shi Aichi 448-8650 (JP)
(74) Representative: Kramer - Barske - Schmidtchen
(86) International application number: PCT/JP2008/059226
(87) International publication number: WO 2008/146660

(57) **Abstract**

Wide-angle imaging data obtained by capturing a view of a vehicle periphery can be converted into wide-angle display data for displaying the view in the same field of view on a display device, and into enlarged display data for enlarging and displaying a portion of the wide-angle imaging data. When the image on the screen of the display is switched between wide-angle display and enlarged display, the target region corresponding to the post-switching display data is set, highlighted, and displayed as the highlighted region (E) on the screen on the pre-switching display data (V1). The surface area of the highlighted region (E) is varied until the surface area highlighted region (E) is the same as the surface area of the target region on the post-switching display data. Lastly, the post-switching display data is displayed in the highlighted region (E).

## Description

### TECHNICAL FIELD

The present invention relates to a vehicle periphery monitoring device for displaying a view of the periphery of the vehicle on an onboard display device on the basis of image data captured by an imaging device mounted on the vehicle.

### BACKGROUND ART

There has been growing awareness of maintaining safety during vehicle operation in recent years, and various techniques for improving safety have been devised and implemented by assisting the driver in operating the vehicle or the like. For example, a drive assistance device has been implemented in which locations that are difficult for the occupant to see are captured by a camera mounted on the vehicle and displayed on a monitor device in the passenger compartment. Patent Document 1, i.e., Japanese Laid-open Patent Application No. 2004-194071, discloses a drive assistance device in which image data acquired by a camera mounted on a side mirror of the vehicle is displayed on a monitor device in the passenger compartment.

The drive assistance device is provided with conversion means whereby image data captured by the camera is processed, converted, and outputted to display means. The conversion means processes image data in accordance with the range-indicating "clip range" for clipping the range displayed on the display means, the "magnification ratio" used in the display process, and other parameters. The processed image data is displayed on the display means.
Patent Document 1: Japanese Laid-open Patent Application No. 2004-194071 (see paragraphs 32 through 35, 54 through 60, and the like)

With the drive assistance device disclosed in Patent Document 1, the image data automatically processed in accordance with the coordinated magnification ratio and clip range is displayed (e.g., see paragraph 60 and the like of Patent Document 1). An example of the clip range is shown in FIGS. 10 and 15 of Patent Document 1. The example is used to describe the parameters given to the conversion means and is not shown to the occupant (e.g., see Patent Document 1, paragraphs 59, 74, and the like). In other words, with the drive assistance device disclosed in Patent Document 1, it is difficult for the occupant to know which location in the imaging range of the camera is being enlarged. For example, the correspondence between the images before and after switching may be particularly difficult to understand when a certain location is clipped, enlarged, and displayed from a wide-angle display. In the case that a switch is made from an enlarged display to a wide-angle display, it may be difficult to understand where the enlarged location is positioned in the corresponding wide-angle display.

### DISCLOSURE OF THE INVENTION

The present invention was contrived in view of the foregoing problems, and an object thereof is to provide a vehicle periphery monitoring device wherein a switch can be made between a wide-angle display and an enlarged display, and an image obtained by capturing a view of the periphery of the vehicle can be displayed on an onboard display device, and wherein the mutual relationship between the pre- and post-switching images can be presented to a user with high visibility and a light computational load.

According to an aspect of the present invention, which was devised in order to achieve the above-described objects, there is provided a vehicle periphery monitoring device comprising:
an image capture unit for capturing wide-angle imaging data of the vehicle periphery, the data being captured by one or a plurality of imaging devices mounted on the vehicle;
an image converter capable of carrying out a conversion process for converting the wide-angle imaging data to wide-angle display data as display data displayed on a display device inside the vehicle, and a conversion process for converting a data portion in a preset range in the wide-angle imaging data to enlarged display data as the display data;
a switching unit for switching the display data displayed on the display device; and
a display controller for setting, as a highlighted region on the screen of the display device, a target region that corresponds to post-switching display data, the post-switching display data being set over the display data before the display data is switched by the switching unit, and for highlighting and displaying the highlighted region, changing the surface area of the highlighted region until the surface area of the highlighted region is the same as the surface area of the target region in the post-switching display data, and displaying the post-switching display data after the surface area has been changed.

In accordance with this aspect, the display controller performs control in the following manner when a switch is made from, e.g., wide-angle display data to enlarged display data. A target region that corresponds to the enlarged display data, which is post-switching display data, is highlighted and displayed over the wide-angle display data, which is pre-switching display data. In this case, the target region is set as the highlighted region on the screen of the display device. The surface area of the highlighted region is varied until the surface area of the highlighted region is the same as the surface area of the target region on the enlarged display data, which is the post-switching display data. Lastly, the enlarged display data, which is the post-switching image data after the change has been completed, is displayed. The opposite procedure is performed when a switch is made from the enlarged display data to the wide-angle display data.
In this manner, the mutual relationship between the images before and after switching is displayed without breakup due to continuous variation in the highlighted region set on the screen. The computational load becomes very heavy when display data is switched while varying the magnification ratio of the enlarged display data in a stepwise fashion. However, in the case that the surface area of the highlighted region is continuously varied, the computational load is dramatically reduced because display can be carried out without regard for the captured wide-angle imaging data.
As a result, a vehicle periphery monitoring device can be provided in which a captured image of the peripheral view of the vehicle can be switched between a wide-angle display and an enlarged display, and displayed on an onboard display device, and the mutual relationship between the images before and after switching can be presented to the user with high visibility and a light computational load.

The vehicle periphery monitoring device according to the present invention is **characterized in that** the display controller superimposes and displays the highlighted region on the pre-switching display data, specifically, the image based on the display data, until the change in the surface area of the highlighted region is completed.

In accordance with this aspect, two-types of control are sufficient before and after the display of data: display of pre-switching display data and display of post-switching display data. The highlighting display showing the target region is carried out with a light computational load independent of displaying the display data. Since the pre-switching display data is displayed immediately prior to switching, the mutual relationship between the images before and after switching can be more readily ascertained.

The vehicle periphery monitoring device of the present invention is **characterized in that** the display controller highlights and displays data by using a frame for enclosing the target region.

Such a frame can be superimposed on the display data with a light computational load. Visibility is good because the target region is directly enclosed by the frame. Therefore, it is possible to provide a vehicle periphery monitoring device that can present the mutual relationship between the pre- and post-switching images to a user with high visibility and a light computational load.

The vehicle periphery monitoring device according to the present invention is **characterized in that** the display controller highlights and displays data by changing the surface area of the background on the screen of the display device.

The surface area of the background on the screen of the display device is varied, making it is possible to display the clipped display data of the target region and to obtain a visibility effect in which the display data to be displayed is magnified or reduced in size. The computational load is light because such modifications to the surface area of the background do not involve any image processing of the display data. Therefore, it is possible to provide a vehicle periphery monitoring device that can present the mutual relationship between the pre- and post-switching images to a user with high visibility and a light computational load.

### BRIEF DESCRIPTION OF THE DRAWINGS

FIG. 1 is a schematic block diagram showing an example of the configuration of the vehicle of the first embodiment;
FIG. 2 is a schematic block diagram showing an example of the configuration of the periphery monitoring device of the first embodiment;
FIG. 3 is a descriptive view showing an example of a screen when a switch is made between a wide-angle display and an enlarged display;
FIG. 4 is a descriptive view showing an example of a screen when a switch is made between a wide-angle display and an enlarged display;
FIG. 5 is a descriptive view showing an example of a screen when a switch is made between a wide-angle display and an enlarged display;
FIG. 6 is a descriptive view showing another example of a screen when a switch is made between a wide-angle display and an enlarged display;
FIG. 7 is a descriptive view showing another example of a screen when a switch is made between a wide-angle display and an enlarged display;
FIG. 8 is a descriptive view showing another example of a screen when a switch is made between a wide-angle display and an enlarged display;
FIG. 9 is a descriptive view showing an example of a screen when a switch is made between an enlarged display and a wide-angle display;
FIG. 10 is a descriptive view showing an example of a screen when a switch is made between an enlarged display and a wide-angle display;
FIG. 11 is a descriptive view showing an example of a screen when a switch is made between an enlarged display and a wide-angle display;
FIG. 12 is a schematic block diagram showing an example of the configuration of the vehicle of the second embodiment;
FIG. 13 is a schematic block diagram showing an example of the configuration of the periphery monitoring device of the second embodiment;
FIG. 14 is a descriptive view showing an example of a screen when a switch is made to an enlarged display in the second embodiment;
FIG. 15 is a descriptive view showing an example of a screen when a switch is made to an enlarged display in the second embodiment;
FIG. 16 is a descriptive view showing an example of a screen when a switch is made to an enlarged display in the second embodiment; and
FIG. 17 is a descriptive view showing an example of a screen when a switch is made to an enlarged display in the second embodiment.

### BEST MODE FOR CARRYING OUT THE INVENTION

### [First Embodiment]

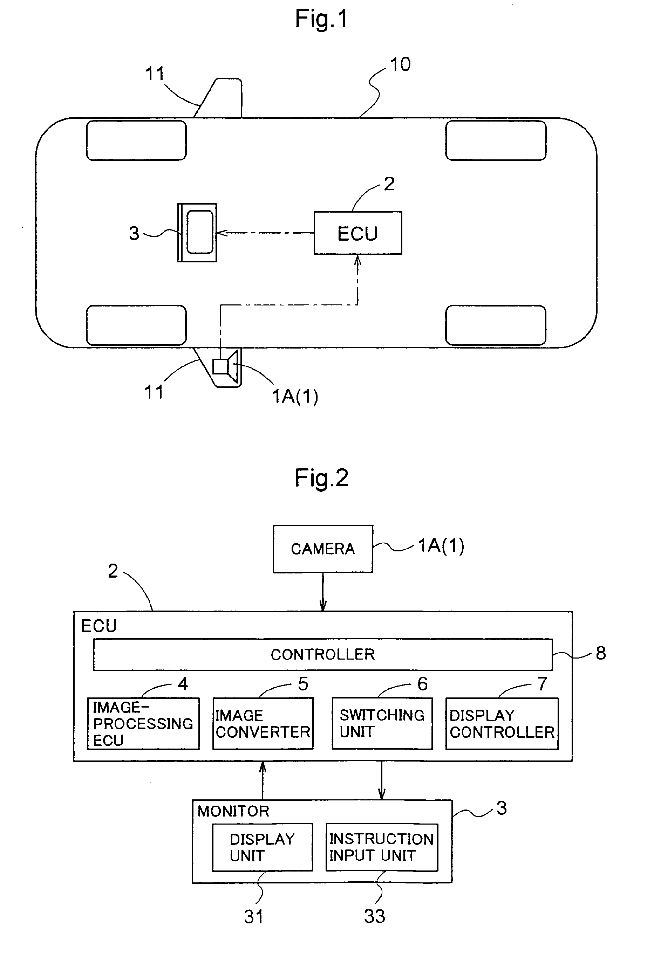

An embodiment of a vehicle periphery monitoring device (hereinbelow referred to simply as a "periphery monitoring device") of the present invention will be described below with reference to the accompanying drawings. FIG. 1 is a schematic block diagram showing a configuration example of a vehicle 10 on which the periphery monitoring device of the present invention is mounted. FIG. 2 is a schematic block diagram showing a configuration example of a vehicle periphery monitoring device of the present invention.

The main part of the periphery monitoring device of the present invention is an ECU 2. The ECU 2 is provided with a microprocessor for processing information, e.g., image information, that has been entered, and a digital signal processor (DSP). The ECU 2 is composed of an electronic circuit in which the processor is a main component. The ECU 2 has a storage unit that is housed in the processor or is composed of a memory, register, or the like mounted as a separate component.

A monitor 3 corresponding to the display device of the present invention is provided in the vicinity of the occupant's seat. The monitor 3 has a display unit 31 and an instruction input unit 33. In the present embodiment, the monitor 3 is a liquid crystal device provided with a backlight, and a touch panel is formed on the screen. The touch panel functions as the instruction input unit 33 into which instructions from the occupant are entered. It is advantageous to also use the monitor 3 as a display device of a navigation system. The monitor 3 is not limited to a liquid crystal device, and it is also possible to use a plasma display, a CRT display, or another scheme.

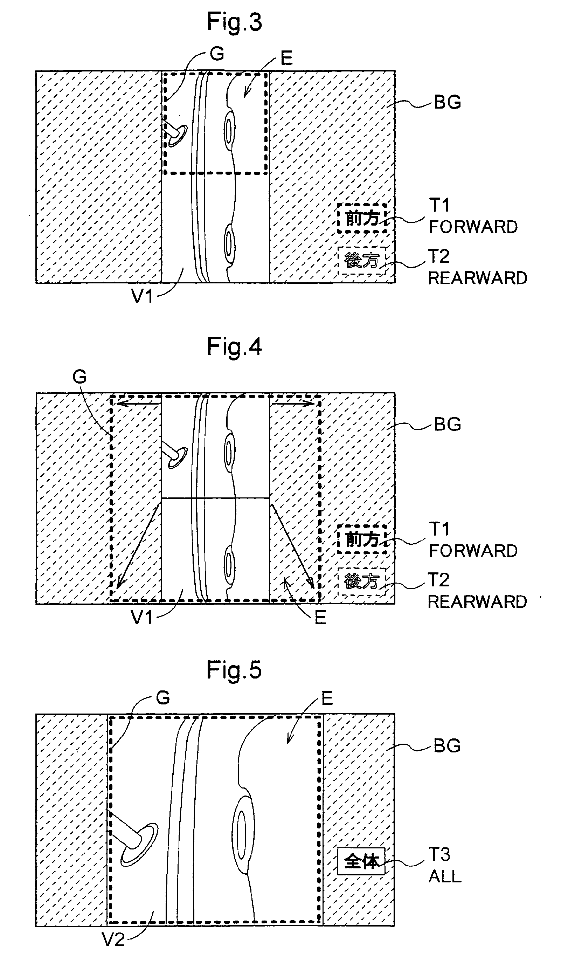

In the present embodiment, a camera 1 (1A) is provided so that the optical axis thereof faces downward below a door mirror 11 on the passenger side of the vehicle 10 as an imaging device for capturing a view of the vehicle periphery. The camera 1 is a digital camera housing a charge-coupled device (CCD), a CMOS image sensor (CIS), or another imaging element, and the camera outputs the captured information in real time as chronological video information. The camera 1 is a wide-angle camera and has an imaging range (see FIG. 3) from the front end to the rear end side surface of the vehicle 10. The camera 1 corresponds to the imaging device of the present invention.

The periphery monitoring device of the present invention has functional units including an image capture unit 4, an image converter 5, a switching unit 6, a display controller 7, and a controller 8, as shown in FIG. 2. These are differentiated by function and do not necessarily need to be physically independent. In the present embodiment, these functional units are implemented by the ECU 2 in which a microprocessor or the like is the main component, and the function of each unit is performed in cooperation with a software program. As described above, the ECU 2 is provided with a memory, a disk device (hard disk, optical disk, magnetic disk, or magneto-optical disk), or other storage means. For example, internal and external memory and a disk device are used as temporary storage or the like for a program executed by the microprocessor and for the captured image data. Such connections are well known, and a detailed description and diagram thereof are omitted herein in order to facilitate description.

The image capture unit 4 captures wide-angle imaging data of the periphery of the vehicle 10 captured by the camera 1 mounted on the vehicle 10. As described above, the camera 1 is a wide-angle camera and has an imaging range from the front end to the rear end side surface of the vehicle 10. Therefore, the image data received by the image capture unit 4 is wide-angle imaging data.

The image converter 5 generates display data to be displayed on the monitor 3 inside the vehicle on the basis of the wide-angle imaging data received by the image capture unit 4. The display data is generated by adjusting the aspect ratio for conformity with the display screen, modifying the number of pixels sufficient for the screen display, and carrying out other image conversion processes. In the present embodiment, the display data can undergo two general types of conversion processes. One conversion process is used for converting substantially all of the wide-angle imaging data into wide-angle display data. The second conversion process is used for converting partial data in a preset range of the wide-angle imaging data into wide-angle display data. Therefore, an image having the same field of view as the wide-angle imaging data is displayed in the wide-angle display on the monitor 3, and an image obtained by enlarging a portion of the wide-angle imaging data is displayed in enlarged form.

The number of pixels of the camera 1 is sufficiently greater than the number of pixels of the display unit 31. Therefore, the wide-angle imaging data is an image having a sufficiently large number of pixels, and the pixels are thinned out in the conversion from wide-angle imaging data to wide-angle display data. It is advantageous to use an averaging process or the like during the thinning process. The enlarged display data does not involve enlarging the wide-angle display data to its original state, but rather is generated by thinning out the pixels from the wide-angle imaging data within a setting range in the same manner as in the conversion to the wide-angle display data. In other words, the wide-angle display data and the enlarged display data have different setting ranges and thinning ratios, but are generated by substantially the same conversion process.

The switching unit 6 is a functional unit for switching the display data to be displayed on the monitor 3. Specifically, the switching unit 6 is a functional unit for determining whether to display the wide-angle display data or the enlarged display data on the monitor 3.

The display controller 7 performs graphical user interface (GUI) control for showing with high visibility the mutual relationship between the pre- and post-switching images when the switching unit 6 switches display data. A detailed description is provided below.

The controller 8 receives instructions for switching display data from the touch panel as the instruction input unit 33, or otherwise receives input from various input means, including input means that are not shown, and is a functional unit for controlling the various functional units of the ECU 2.

The GUI control carried out by the display controller 7 is described below with reference to the screen examples of the monitor 3 shown in FIGS. 3 to 11 when display data switching is performed.

FIG. 3 shows an example displayed on the monitor 3. In this example, wide-angle display data V1 obtained by adjusting the number of pixels or performing another conversion process on the wide-angle imaging data captured by the camera 1 disposed on the door mirror 11. The left and right of the wide-angle display data V1 is background BG, and the background is expressed by, e.g., dramatically reducing the brightness of the liquid crystal pixels. Two buttons T1 and T2 indicated by "Forward" and "Rearward" are provided on the screen as buttons on the touch panel of the monitor 3 that functions as the instruction input unit 33. It is apparent from FIG. 3 that the image captured by the camera 1 includes the front-end side surface and the rear-end side surface of the vehicle 10, and is a long image having a high aspect ratio. Accordingly, the size of the image is reduced and the visibility is compromised when [a person] desires to check the state of the front-end side surface or the rear-end side surface of the vehicle 10. It is therefore advantageous to be able to improve visibility by enlarging and displaying only one side. In the present embodiment, the region that corresponds to "Forward" in the wide-angle imaging data is enlarged and displayed when the "Forward" button is operated in a state in which, e.g., the wide-angle display data V1 is displayed.

FIG. 3 shows the state in which the button T1 indicating "Forward" has been pressed when the wide-angle display data V1 is displayed. The button T1 thus operated is brightly displayed, and the button T2 indicating "Rearward" is dimly or darkly displayed in an input prohibited state. When the button T1 is operated, the region that corresponds to a preset range in the wide-angle imaging data is highlighted and displayed on the wide-angle display data V1. This region corresponds to the enlarged display data and is equivalent to the target region of the present invention. In the example shown in FIG. 3, the target region is highlighted and displayed by an enclosing frame G, and the highlighted region E is set on the screen of the monitor 3. The frame G may be made to blink. In the present embodiment, the frame G encloses the entire periphery of the target region, but no limitation is imposed by this mode. A portion of the entire periphery of the target region may be enclosed as long as the target region is clearly highlighted and displayed. For example, only the four corners of the target region may be enclosed.

Next, the display controller 7 operates to enlarge the frame G in the manner shown in FIG. 4 until the highlighted region E enclosed by the frame G reaches the same surface area as the target region in the enlarged display data after the display has been switched. Specifically, the surface area of the highlighted region E is enlarged. At this point, the movement is smooth when the frame G is successively (continuously or intermittently) enlarged, resulting is a favorable effect.

The display controller 7 displays the enlarged display data V2, as shown in FIG. 5, after the enlargement of the surface area of the highlighted region E has been completed. In this case, the highlighted display in the frame G may be ended simultaneously with the display of the enlarged display data V2, or the highlighted display may be continued for a predetermined length of time. After the enlarged display data V2 has been displayed, the mutual relationship between the images before and after switching is more readily discerned by the user when the highlighting and display is continued for a predetermined length of time, e.g., about 1 or 2 seconds. When the enlarged display data V2 is displayed on the monitor 3, the button that can be operated on the touch panel is only the button for making a change to "All," in other words, the button T3 for changing to wide-angle display data V1.

As described above, the display controller 7 continues to display the wide-angle display data V1, which is the pre-switching display data, until the variation in the surface area of the highlighted region E has been completed. Only the frame G showing the highlighted region E varies until the enlarged display data V2, which is the post-switching display data, is displayed. However, since the same target regions in the wide-angle display data V1 and the enlarged display data V2 are associated by the varying frame G, the mutual relationship between the images before and after switching can be shown to the user with high visibility. Of course, it is possible to show the mutual relationship between the images before and after switching to the user with high visibility by generating and displaying the enlarged display data V2 while varying the magnification ratio. However, in this method, the amount of computation carried out by the ECU 2 containing the image converter 5 dramatically increases. In accordance with the present invention, the amount of computation is dramatically less than in such a method, and high visibility can be assured.

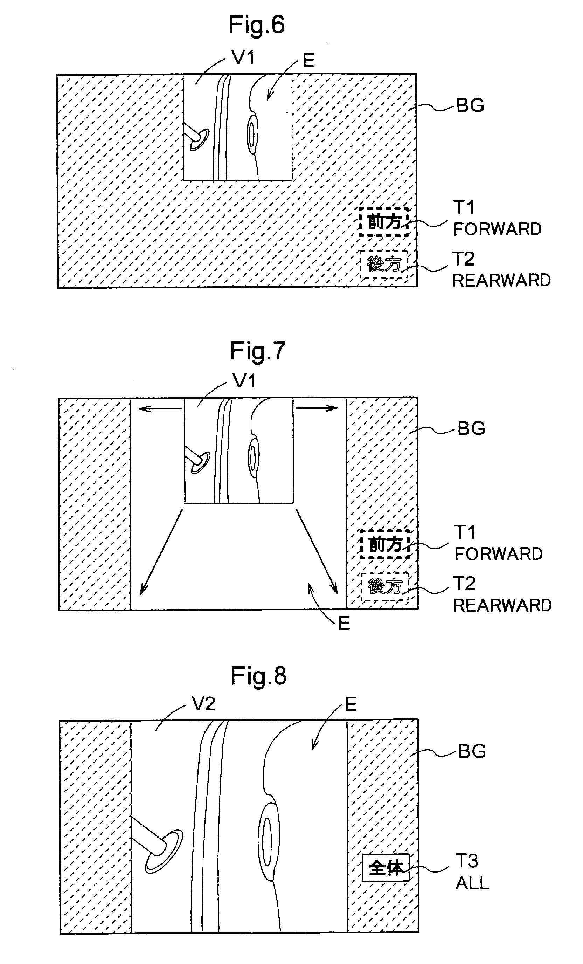

FIGS. 6 to 8 are descriptive views showing another example of the screen of the display device, and are examples of a screen subsequent to the screen shown in FIG. 3. In FIG. 3, the region that corresponds to a preset range in the wide-angle display data V1 is highlighted and displayed on the wide-angle display data when the button T1 is operated. In the example shown in FIG. 6, data is highlighted and displayed by changing the surface area of the background BG on the screen of the monitor 3.

Next, the display controller 7 operates to vary the background BG in the manner shown in FIG. 7 until the highlighted region E enclosed by the background BG reaches the same surface area as the target region in the enlarged display data V2 after the display has been switched. Specifically, the surface area of the background BG is reduced and the surface area of the highlighted region E is enlarged. At this point, the movement is smooth when the background BG is successively (continuously or intermittently) varied, resulting is a favorable effect. The display controller 7 displays the enlarged display data V2, as shown in FIG. 8, after the variation of the surface area of the highlighted region E has been completed. Completion of the process for highlighting and displaying data, as well as the process for displaying the buttons T1 to T3 on the touch panel, are not described here because these are the same as in the examples described above with reference to FIGS. 3 to 5.

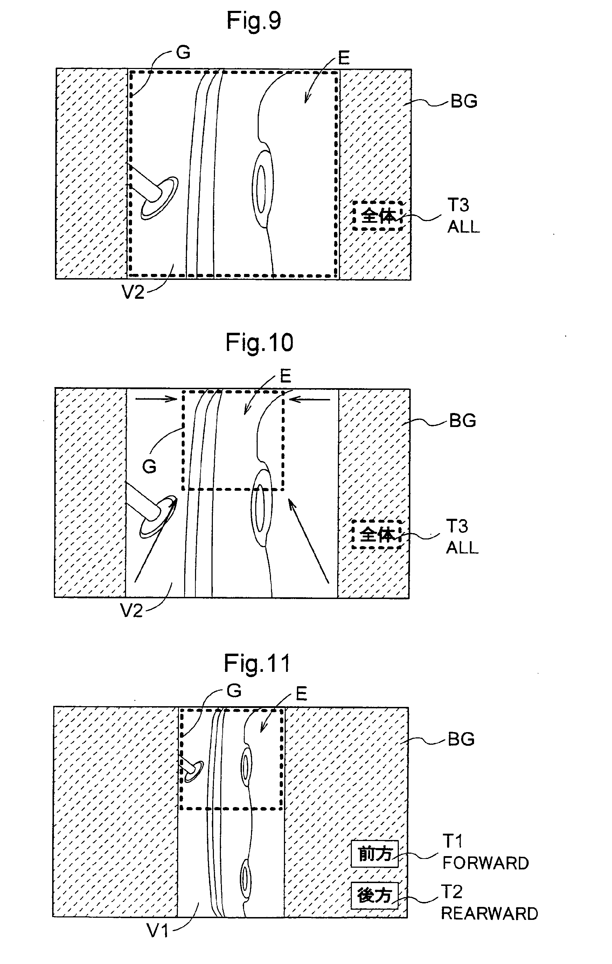

FIGS. 9 to 11 are descriptive views showing yet another example of a screen of the display device. These are examples of a case in which a switch is made from the enlarged display data V2 to the wide-angle display data V1, which is opposite from the examples shown in FIGS. 3 to 8.

FIG. 9 shows the screen of the monitor 3 following the screen shown in FIG. 5 for a case in which the button T3 indicating "All" on the touch panel has been operated. The frame G disappears at least after a predetermined length of time has passed following the switch from the wide-angle display data V1 to the enlarged display data V2, but the frame is displayed again when the button T3 is operated. However, the frame G shown in FIG. 5 is the frame G "after" the surface area has varied and until it reaches the same surface area as that of the target region on the post-switching display data. In contrast, the frame G shown in FIG. 9 is the frame G "before" variation occurs. In other words, the frame G shown in FIG. 9 shows the target region to which the post-switching display data corresponds on the pre-switching display data.

Next, the frame G is reduced by the display controller 7 until the highlighted region E enclosed by the frame G reaches the same surface area as that of the target region in the wide-angle display data V1 after the display is switched, as shown in FIG. 10. In other words, the surface area of the highlighted region E is reduced. At this point, the movement is smooth when the frame G is successively reduced, resulting in a favorable effect.

The display controller 7 displays the wide-angle display data V1, as shown in FIG. 11, after reduction of the surface area of the highlighted region E has been completed. In this case, the highlighting and display using the frame G may be ended simultaneously with the display of the wide-angle display data V1, or the highlighting and display may be continued for a predetermined length of time. After the wide-angle display data V1 has been displayed, it is advantageous for the process of highlighting and displaying the data to be continued for a predetermined length of time, e.g., about 1 or 2 seconds because the mutual relationship between the images before and after switching is more readily discerned by the user. When the wide-angle display data V1 is displayed on the monitor 3, the buttons that can be operated on the touch panel are the buttons for making a change to "Forward" and "Rearward," in other words, the buttons T1 and T2 for changing to the enlarged display data V2.

### [Second Embodiment]

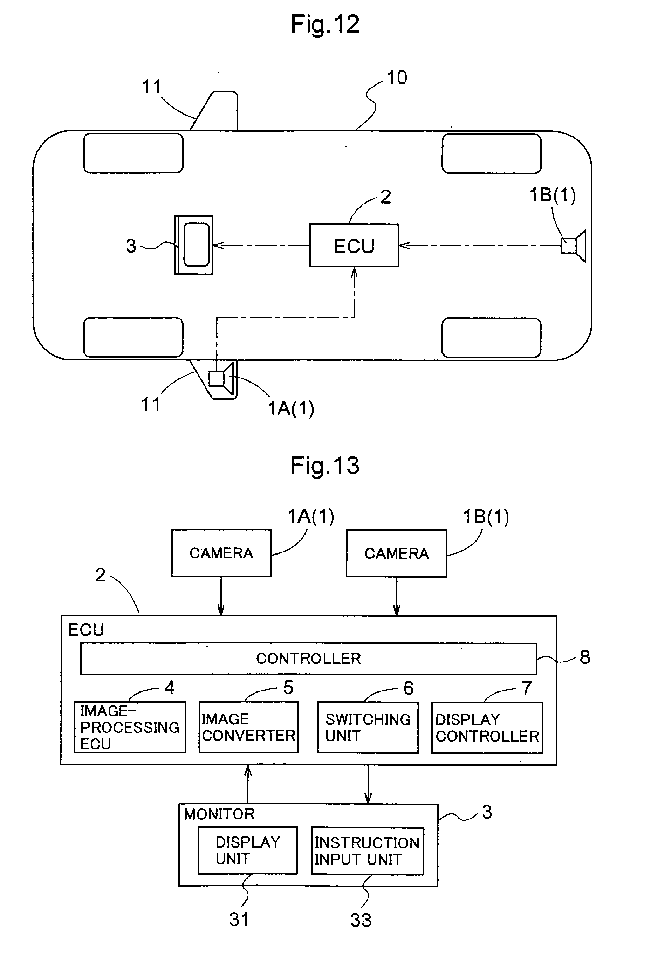

In the example described above, an example was described for a case in which an image based on the wide-angle imaging data captured by a single camera 1 (1A) mounted on the vehicle 10 is displayed on the monitor 3. However, the present invention is not limited to a single camera 1, and the present invention can also be applied to a case in which images based on wide-angle imaging data captured by a plurality of cameras 1 are displayed on the monitor 3. A second embodiment of the present invention is described below with reference to FIGS. 12 to 17. FIG. 12 is a schematic block diagram showing another example of the configuration of the vehicle 10 in which the periphery monitoring device of the present invention has been mounted. FIG. 13 is a schematic block diagram showing another example of the configuration of the periphery monitoring device of the present invention.

In the present embodiment, two cameras 1 are provided as imaging devices for capturing an image of a vehicle periphery. The first camera 1A(1) is provided so that the optical axis thereof faces downward below a door mirror 11 on the passenger side of the vehicle 10 in the same manner as in the embodiment described above. The second camera 1B(1) is provided as a back camera facing rearward on the rear part of the vehicle 10. The camera 1B is a wide-angle camera and has a 120 to 140° angle of visibility in the horizontal direction. The camera 1B may also be a fisheye camera having an angle of visibility (angle of view) of 180° or more. It is also possible to set the optical axis to have a downward inclination angle of about 30°, and to capture a view of a region that extends at least to the rearward horizontal line of the vehicle 10. The camera 1B is also a digital camera that houses a CCD, CIS, or another imaging element, and outputs the captured information in real time as chronological video information in the same manner as does the camera 1A. The ECU 2, the monitor 3, and other elements, as well as other configurations are the same as the embodiment described above, and a description thereof is omitted.

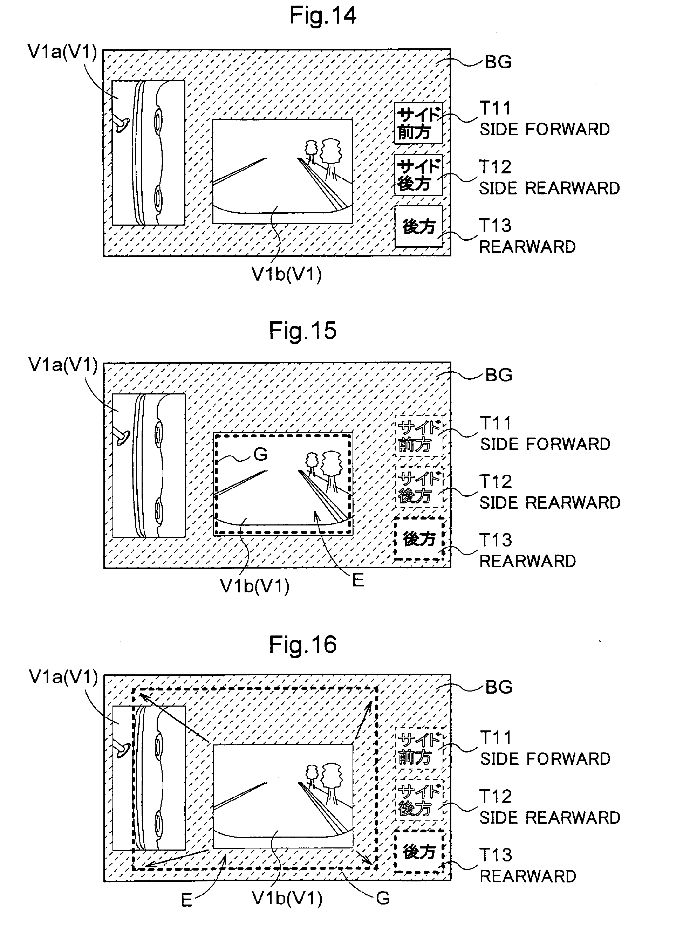

The GUI control carried out by the display controller 7 according to the second embodiment is described below with reference to a screen example of the monitor 3 when the display data is switched, as shown in FIGS. 14 to 17.

The image captured by the camera 1A provided to the door mirror 11, as well as the image based on the image captured by the camera 1B provided to the rear part of the vehicle 10, are displayed in FIG. 14. Each of the images captured by the cameras 1A and 1B is a wide-angle captured image, and can be regarded as images that cover an even wider range when the two imaging ranges are combined. Therefore, the images captured by one or both of the cameras 1A and 1B correspond to the wide-angle imaging data of the present invention. The image shown in FIG. 14 is converted based on the wide-angle imaging data defined in this manner, and is the displayed image. In other words, there is displayed wide-angle display data V1 obtained by adjusting the pixels of the wide-angle imaging data and carrying out other conversion processes. In a case in which the regions must be differentiated, the data is referred to as wide-angle display data V1a based on the wide-angle imaging data captured by the camera 1A, and wide-angle display data V1b based on the wide-angle imaging data captured the camera 1B.

The periphery of the wide-angle display data V1 (V1a and V1b) is background BG in the same manner as in the first embodiment. Three buttons T11, T12, T13 labeled "Side front," "Side rear," and "Rear" are provided on the screen as buttons on the touch panel of the monitor 3, which functions as the instruction input unit 33. In the same manner as in the first embodiment, the image captured by the camera 1A is a long image having a high aspect ratio, and this image includes the front-end left-side surface and the rear-end left-side surface of the vehicle 10. The size of the image is small and visibility is inadequate in the case that one desires to check the state of the front-end left-side surface and the rear-end left-side surface of the vehicle 10. It is therefore advantageous in that one side can be enlarged and displayed. The corresponding region in the wide-angle imaging data is enlarged and displayed when the button T11 or T12 labeled "Side front" or "Side rear" is operated in a state in which the wide-angle display data V1 is displayed. The wide-angle display data V1 is a wide-angle image that allows the side and rear of the vehicle 10 to be viewed. Therefore, the size of the image is small and visibility is inadequate in the case that one desires to check the state to the rear. Accordingly, it is advantageous to be able to enlarge and display only the rear side. The corresponding region in the wide-angle imaging data, i.e., the wide-angle imaging data captured by the camera 1B, is enlarged and displayed when the button T13 labeled "Rear" is operated in a state in which the wide-angle display data V1 is displayed.

FIG. 15 shows the state in which the button T13 labeled "Rear" has been operated when the wide-angle display data V1 (V1a and V1b) is being displayed. The button T13 thus operated is brightly displayed, and the other buttons T11 and T12 are dimly or darkly displayed in an input prohibited state. When the button T13 is operated, the region that corresponds to a preset range in the wide-angle imaging data is highlighted and displayed on the wide-angle display data V1. This region is a region that corresponds to the enlarged display data V2 to be subsequently displayed and is equivalent to the target region of the present invention. In the example shown in FIG. 15, the target region corresponds to substantially all the wide-angle image data captured by the camera 1B. In the present example, a frame G for enclosing the target region is used for highlighting and displaying the data, but all of the wide-angle display data V1b is highlighted and displayed by the frame G in the manner shown in FIG. 15, and the highlighted region E is set on the screen of the monitor 3.

Next, the display controller 7 operates to enlarge the frame G in the manner shown in FIG. 16 until the highlighted region E reaches the same surface area as the target region in the enlarged display data after the display has been switched. In other words, the surface area of the highlighted region E is enlarged. At this point, the movement is smooth when the frame G is successively (continuously or intermittently) enlarged in the same manner as in the first embodiment, resulting in a favorable effect.

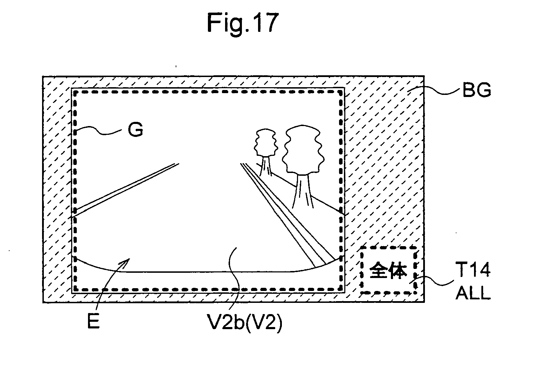

The display controller 7 displays the enlarged display data V2b (V2), as shown in FIG. 17, after the enlargement of the surface area of the highlighted region E has been completed. In this case, the highlighting and display using the frame G may be ended simultaneously with the display of the enlarged display data V2b, or the highlighting and display may be continued for a predetermined length of time. After the enlarged display data V2b has been displayed, the mutual relationship between the images before and after switching is more readily discerned by the user when the highlighting and display is continued for a predetermined length of time, e.g., about 1 or 2 seconds. When the enlarged display data V2b is displayed on the monitor 3, the button that can be operated on the touch panel is only the button for making a change to "All," in other words, the button T14 for changing to wide-angle display data V1.

As described above, the present invention can also be advantageously applied to cases in which images captured by a plurality of cameras 1 are used as wide-angle imaging data. The screens of the display unit 31 of the monitor 3 introduced in the present invention and shared between the first and second embodiments are mere examples. Modifications can be made by those skilled in the art within a range that does not depart from the spirit of the present invention, and such modifications remain within the technical scope of the present invention.

In accordance with the present invention, it is possible to provide a vehicle periphery monitoring device that can switch between a wide-angle display and an enlarged display and display an image obtained by capturing a view of the periphery of the vehicle on a display device inside the vehicle, and that can present the mutual relationship between the pre- and post-switching images to a user with high visibility and a light computational load.

### INDUSTRIAL APPLICABILITY

The vehicle periphery monitoring device of the present invention can be used in automobiles and other vehicles provided with a display device for displaying an image of the vehicle periphery.

## Claims

1. A vehicle periphery monitoring device comprising:
an image capture unit for capturing wide-angle imaging data of the vehicle periphery, the data being captured by one or a plurality of imaging devices mounted on the vehicle;
an image converter capable of carrying out a conversion process for converting the wide-angle imaging data to wide-angle display data as display data displayed on a display device inside the vehicle, and a conversion process for converting a data portion in a preset range in the wide-angle imaging data to enlarged display data as the display data;
a switching unit for switching the display data displayed on the display device; and
a display controller for setting, as a highlighted region on the screen of the display device, a target region that corresponds to post-switching display data, the post-switching display data being set over the display data before the display data is switched by the switching unit, and for highlighting and displaying the highlighted region, changing the surface area of the highlighted region until the surface area of the highlighted region is the same as the surface area of the target region in the post-switching display data, and displaying the post-switching display data after the surface area has been changed.

2. The vehicle periphery monitoring device according to claim 1, wherein the display controller superimposes the highlighted region in the display of the pre-switching display data until the change in the surface area of the highlighted region is completed.

3. The vehicle periphery monitoring device according to claim 1 or 2, wherein the display controller highlights and displays data by using a frame for enclosing the target region.

4. The vehicle periphery monitoring device according to any of claims 1 through 3, wherein the display controller highlights and displays data by changing the surface area of the background on the screen of the display device.
